# EUROPÄISCHE PATENTSCHRIFT

(11) **EP 2 534 077 B1**
(45) Veröffentlichungstag und Bekanntmachung des Hinweises auf die Patenterteilung: **11.12.2013**
(21) Anmeldenummer: 11702916.5
(22) Anmeldetag: 24.01.2011
(51) Int. Cl.: B65G 17/38, F16G 13/18

(54) **GELENK-GLIEDERKETTE UND FÖRDEREINRICHTUNG**
ARTICULATED LINK CHAIN AND CONVEYING DEVICE
CHAÎNE À MAILLONS ARTICULÉS ET TRANSPORTEUR

(30) Priorität: 12.02.2010 CH 17412010
(43) Veröffentlichungstag der Anmeldung: 19.12.2012
(73) Patentinhaber: Ferag AG, 8340 Hinwil (CH)
(72) Erfinder: MOSER, Tobias, CH-8637 Laupen (CH)
(74) Vertreter: Schaad, Balass, Menzl & Partner AG
(86) Internationale Anmeldenummer: PCT/CH2011/000007
(87) Internationale Veröffentlichungsnummer: WO 2011/097743

(56) Entgegenhaltungen:
- EP-A1- 1 693 322
- DE-A1-102008 021 233
- FR-A1- 2 232 497
- US-A- 4 294 345

## Beschreibung

Die vorliegende Erfindung betrifft eine Gelenk-Gliederkette gemäss dem Oberbegriff des Patentanspruchs 1. Ausserdem betrifft die vorliegende Erfindung eine Fördereinrichtung gemäss dem Patentanspruch 15.

Eine Gelenk-Gliederkette dieser Art ist aus der Druckschrift DE 26 29 528 A1 und der entsprechenden Druckschrift US 4,294,345 bekannt.

Diese Druckschriften zeigen eine Kugelgelenk-Gliederkette, wie sie insbesondere in Versandsräumen von Druckereien zur Anwendung kommt. Die Gelenkglieder oder Kettenglieder weisen Verbindungselemente in Form von abgekröpften Laschen auf, die in einem Endabschnitt aneinander anliegen. Die Verbindungselemente sind mittels Kugelgelenken aneinandergekoppelt. Die Gelenke weisen einen als äquatoriales Kugelsegment ausgebildeten Gelenkkörper auf, der fest auf einer Achse, die rechtwinklig zur Längsrichtung des betreffenden Verbindungselements verläuft, angeordnet ist. Der Gelenkkörper ist auf zwei sich gegenüberliegenden Seiten abgeflacht ausgebildet und in einer ringförmigen Gelenkpfanne gehalten. Die Gelenkpfanne ist in Ausnehmungen, die in dem Endabschnitt der Laschen des benachbarten Kettengliedes angeordnet sind, eingefasst. Auf Grund der beschriebenen Ausbildung der Kugel-Gelenkgliederkette kann diese im Schub- und Zugbetrieb verwendet werden.

Die Gelenkglieder können gegenüber einander in einer Ebene, die durch die Längsrichtung der Verbindungselemente und die Achse definiert ist, bewegt werden. Das Gelenk erlaubt weiter eine Bewegung in einer Ebene die orthogonal zur Achse ausgerichtet ist und durch die Mitte des Gelenkkörpers verläuft. Zusätzlich können die Gelenkglieder gegenüber einander, um die Längsrichtung des Verbindungselements, gedreht (verwunden) werden. Es ist also eine Bewegung der Kugelgelenk-Gliederkette in allen drei Dimensionen möglich.

An jedem Verbindungselement ist ein Adapterelement angeordnet, welches zur Aufnahme von Transportklammern zum Befördern von Druckereiprodukten dient.

Solche Kugelgelenk-Gliederketten haben sich über lange Zeit bewährt und sind bereits in sehr vielen Anlagen zur Anwendung gekommen.

Durch die zum Teil hohen Belastungsspitzen, welche beispielsweise infolge eines Notstopps auftreten, werden die Gelenkpfannen und die Gelenkkörper zum Teil stark beansprucht. Dies kann über lange Zeit zu einem Verschleiss zwischen den Gelenkpfannen und den Gelenkkörpern führen und die Lebensdauer der Kugelgelenk-Gliederkette begrenzen. Eine Auswechslung der Gelenk-Gliederketten ist mitunter ziemlich aufwändig.

Daher ist es eine Aufgabe der vorliegenden Erfindung, eine gattungsgemässe Gelenk-Gliederkette beziehungsweise Fördereinrichtung zu schaffen, die eine hohe Lebensdauer aufweist.

Diese Aufgabe wird durch eine Gelenk-Gliederkette gemäss dem Patentanspruch 1 und einer Fördereinrichtung gemäss dem Patentanspruch 15 gelöst. Besonders bevorzugte Ausführungsformen sind mit den in den abhängigen Ansprüchen aufgeführten Merkmalen ausgestattet.

Die erfindungsgemässe Gelenk-Gliederkette ist mit hintereinander angeordneten und jeweils über ein Gelenk miteinander verbundenen Gelenkgliedern ausgestattet. Die Gelenkglieder weisen je ein steifes Verbindungselement mit einem in einem ersten Endbereich angeordneten ersten Durchlass und einem in einem zweiten Endbereich angeordneten zweiten Durchlass auf. Im ersten Durchlass ist eine Achse angeordnet, die vorzugsweise den ersten Durchlass durchgreift und über das Verbindungselement vorsteht. Die Achse ist rechtwinklig zur Längsrichtung des Verbindungselements ausgerichtet. Auf der Achse, beziehungsweise auf deren vorstehenden Teil, ist ein Gelenkkörper einerseits auf der Achse drehbar gelagert und andererseits im zweiten Durchlass des Verbindungselements eines benachbarten Gelenkgliedes umfangsseitig gehalten. Der Gelenkkörper kann auch einerseits drehfest auf der Achse gehalten und andererseits drehbar im zweiten Durchlass des Verbindungselements eines benachbarten Gelenkglieds gelagert sein. Da der Gelenkkörper ein gummielastisches Material aufweist, lässt er eine Bewegung in einer Ebene und eine Drehung (Verwindung) um die Längsrichtung des Verbindungselements zu. Die Ebene ist dabei definiert durch die Längsrichtung des Verbindungselements und die Achse. Infolge dieser Bewegungen wird der Gelenkkörper verformt und nimmt so eine Verformungsenergie auf. Durch die drehbare Lagerung des Gelenkkörpers auf der Achse, ist zudem eine Bewegung in einer Ebene die durch die Längsrichtung der Verbindungselemente verläuft und orthogonal zur Achse ausgerichtet ist, mit engen Radien ermöglicht.

Die Lagerung des Gelenkkörpers ist als reines Drehlager, nicht als Kugellager, ausgebildet.

In einer weiteren Ausführungsform ist der Gelenkkörper aus einem gummielastischen Material oder aus einem Verbundelement, das gummielastisches Material aufweist, ausgebildet. Eine solche Ausbildung ermöglicht die erwähnte Bewegungsfreiheit und zusätzlich eine einfache und kostengünstige Herstellung des Gelenkkörpers.

Gemäss einer weiteren Ausführungsform ist der Gelenkkörper im zweiten Durchlass des Verbindungselements des benachbarten Gelenkgliedes in Umfangsrichtung formschlüssig gehalten um ein Drehen des Gelenkkörpers relativ zu diesem Verbindungselement zu vermeiden.

In einer weiteren bevorzugten Ausführungsform weist der zweite Durchlass eine umlaufende Nut auf, in welcher ein Haltewulst des Gelenkkörpers gehalten ist. Der Gelenkkörper ist somit im zweiten Durchlass umfangsseitig festgehalten. Selbstverständlich wäre es auch denkbar, eine umlaufende Haltewulst am zweiten Durchlass und eine umfangseitig umlaufende Nut am Gelenkkörper auszubilden.

Entsprechend einer weiteren Ausführungsform weist der Gelenkkörper eine elliptische oder eine mindestens annähernd rechteckige Aussenkontur und eine kreisrunde Innenkontur auf, wobei die Hauptachse der elliptischen Aussenkontur beziehungsweise die längeren Seiten der mindestens annähernd rechteckigen Aussenkontur wenigstens annähernd rechtwinklig zur Längsrichtung des betreffenden, benachbarten Verbindungselements, welches den Gelenkkörper umfangsseitig festhält, verläuft. Der zweite Durchlass des benachbarten Verbindungselements ist dabei ebenfalls in einer entsprechenden elliptischen beziehungsweise mindestens annähernd rechteckigen Form ausgebildet. Dadurch wird die Gelenk-Gliederkette in Längsrichtung steifer und die Nachgiebigkeit bei der Verwindung der einzelnen Gelenkglieder relativ zu einander bleibt nahezu erhalten, verglichen mit der kreisrunden Ausführungsform. Weiter wird ein Drehen des Gelenkkörpers relativ zu dem Verbindungselement des benachbarten Gelenkgliedes vermieden.

In einer weiteren Ausführungsform sitzt der Gelenkkörper drehfest auf der Achse und ist er im zweiten Durchlass des Verbindungselements des benachbarten Gelenkglieds drehbar gelagert.

Gemäss einer weiteren Ausführungsform ist der Gelenkkörper auf der Achse in Umfangsrichtung formschlüssig gehalten um ein Drehen des Gelenkkörpers relativ zur Achse zu vermeiden. Dabei kann der Querschnitt der Achse im Bereich des zweiten Durchlasses des Verbindungselements des benachbarten Gelenkgliedes beziehungsweise im Beriech des Gelenkkörpers vieleckig und der Gelenkkörper radial innen dazu gegengleich ausgebildet sein.

Gemäss einer weiteren Ausführungsform ist zur drehbaren Lagerung zwischen der Achse und dem Gelenkkörper beziehungsweise dem Gelenkkörper und dem Verbindungselement des benachbarten Gelenkgliedes eine Lagerhülse mit vorzugsweise jeweils an beiden axial äusseren Enden radial nach aussen beziehungsweise innen abstehenden Flanschen, angeordnet. Durch eine entsprechende Materialwahl bildet die Lagerhülse ein reibungsarmes und vers chleissarmes Gleitlager zwischen der Achse und dem Gelenkkörper beziehungsweise dem Gelenkkörper und dem Verbindungselement des benachbarten Gelenkgliedes. Die Flansche dienen ausserdem als Gleitlager zwischen dem Gelenkkörper und dem betreffenden Verbindungselement.

Eine weitere Ausführungsform betrifft die Ausbildung der Lagerhülse, die zweiteilig, entlang einer Ebene rechtwinklig zur Achse getrennt, ausgebildet ist. Eine solche Ausbildung der Lagerhülse ermöglicht eine einfache Herstellung der Lagerhülse und des Gelenkkörpers, weil beide Teile unabhängig voneinander hergestellt werden können. Weiter gestaltet sich die Wartung einfach, da die Lagerhülse ohne grossen Aufwand entfernt werden kann.

Eine weitere bevorzugte Ausführungsform betrifft das Verbindungselement, das eine Gabelung und im ersten Endbereich zwei zinkenartige Gabelteile aufweist, wobei zwischen den Gabelteilen der Gelenkkörper angeordnet ist und der zweite Endbereich des benachbarten Verbindungselements zwischen die beiden Gabelteile eingreift. Durch eine solche Ausbildung des Verbindungselements ist die Stabilität der Gelenk-Gliederkette erhöht und eine symmetrische Belastung der Gelenkglieder erreicht.

Eine weitere bevorzugte Ausführungsform betrifft das Verbindungselement, das eine Gabelung und im zweiten Endbereich zwei zinkenartige Gabelteile aufweist, wobei zwischen den Gabelteilen und der Achse je ein Gelenkkörper angeordnet ist. Der erste Endbereich des benachbarten Verbindungselements wirkt zwischen den beiden Gabelteilen mit der Achse zusammen. Bevorzugt sitzt der erste Endbereich des Verbindungselements fest auf der Achse.

Gemäss einer weiteren Ausführungsform weist die Gelenk-Gliederkette Begrenzungselemente, welche die Belastung des Gelenkkörpers, in Längsrichtung der Gelenk-Gliederkette, begrenzen, auf.

In einer weiteren bevorzugten Ausführungsform weisen die Verbindungselemente in einem ersten Endbereich Anschläge und in einem zweiten Endbereich Gegenanschläge auf, wobei die Anschläge mit den Gegenanschlägen des benachbarten Verbindungselements zusammenwirken, um die Belastung der Gelenkkörper in Längsrichtung der Gelenk-Gliederkette zu begrenzen. Die Anschläge berühren dabei die Gegenanschläge während dem normalen Betrieb nicht. Die Anschläge des Verbindungselements beziehungsweise die Gegenanschläge des benachbarten Verbindungselements kommen erst bei grossen Kräften zum Tragen, beispielsweise bei einem Notstopp. Im Falle eines Notstopps können sich die Anschläge des Verbindungselements und die Gegenanschläge eines benachbarten Verbindungselements berühren. Dies begrenzt die Beanspruchung des Gelenkkörpers und des von der Achse und der Lagerhülse gebildeten Gleitlagers.

Im Weiteren betrifft die vorliegende Erfindung eine Fördereinrichtung mit einem, einen C-förmigen Querschnitt aufweisenden Führungskanal und einer in diesem geführten Gelenk-Gliederkette gemäss der vorliegenden Erfindung.

In einer weiteren Ausführungsform ist der Querschnitt des Gelenkkörpers in einem radial innen liegenden Endbereich rechteckförmig sowie daran in radialer Richtung gegen aussen anschliessend, vorzugsweise mit einer konkaven Form, symmetrisch verjüngend ausgebildet. Die Kräfte an der Kontaktfläche zwischen der Achse und dem Gelenkkörper, beziehungsweise Lagerhülse, welche zwischen dem Gelenkkörper und der Achse angeordnet sein kann, werden so gleichmässiger verteilt und die daraus resultierende Spannungsverteilung im Gelenkkörper optimiert.

Gemäss einer weiteren Ausführungsform ist das Verbindungselement aus zwei aneinander befestigten, die Gabelung formenden, abgekröpften Laschen gebildet. Durch die Verwendung von zwei Laschen besteht die Möglichkeit das Verbindungselement einfach herzustellen. Es ist möglich die Laschen identisch auszubilden und anschliessend spiegelsymmetrisch aneinander anzuordnen.

Gemäss einer weiteren bevorzugten Ausführungsform ist der Querschnitt des Gelenkkörpers - in Richtung der Achse gemessen - radial innen grösser als radial aussen. Dadurch wird die Beanspruchung bei einer Verwindung und bei einer Bewegung in einer Ebene, die definiert ist durch die Längsrichtung des Verbindungselements und die Achse des Gelenkkörpers, minimiert. Gleichzeitig wird die notwendige Flexibilität beibehalten.

Der Querschnitt kann in einem radial aussen liegenden Endbereich stufenartige Verjüngungen zur Bildung des Haltewulstes aufweisen. Der Haltewulst dient dazu in eine Nut im zweiten Durchlass eines benachbarten Verbindungselements einzugreifen und dort gehalten zu sein.

Gemäss einer weiteren Ausführungsform sind an beiden Enden der Achse Laufräder frei drehbar angeordnet. Die Laufräder sind dazu bestimmt, in einem im Querschnitt C-förmigen Führungskanal angeordnet zu sein. Durch die frei drehbare Lagerung wird das Kurvenverhalten der Gelenk-Gliederkette verbessert.

Eine weitere bevorzugte Ausführungsform betrifft eine Gelenk-Gliederkette, wobei an jedem Verbindungselement ein Adapterelement angeordnet ist, an welchem ein Führungsrad drehbar gelagert ist. Die Drehachse dieser Lagerung verläuft wenigstens annähernd rechtwinklig zur Achse und schneidet diese mindestens annähernd. Das Führungsrad ist dazu bestimmt, mit einen Führungsspalt begrenzenden Flanken des C-förmigen Führungskanals zur Zentrierung des Gelenkglieds, zusammenzuwirken. Das Führungsrad verhindert, dass die Gelenkglieder Seitenwände des C-förmigen Führungskanals berühren können. Durch eine solche Berührung würde nämlich eine sehr hohe Reibung in der Gelenk-Gliederkette entstehen, was zu Beschädigungen am Führungskanal und an der Gelenk-Gliederkette führen kann.

Gemäss einer weiteren Ausführungsform ist an dem Adapterelement, das dazu bestimmt ist, den Führungsspalt zu durchgreifen, in einem freien Endabschnitt eine Befestigungsanordnung zum Befestigen eines Transportelements, vorzugsweise ein Tablett oder eine Transportklammer, angeordnet. Dieses Adapterelement hat den Vorteil, dass das Transportelement völlig unabhängig von der Form der Gelenk-Gliederkette ausgebildet werden kann. Ausserdem vereinfacht eine solche Ausbildung der Adapterelemente die Montage von Transportelementen. Die Transportelemente müssen den Führungsspalt des C-förmigen Führungskanals nicht durchgreifen.

Die erfindungsgemässe Gelenk-Gliederkette hilft die bewegte Masse zu reduzieren. Dadurch kann Energie eingespart werden, was sich beim Betrieb einer solchen Gelenk-Gliederkette bemerkbar macht.

Beim Betrieb mit niedrigen Frequenzen gibt der Gelenkkörper einen Teil der Verformungsenergie wieder zurück, wenn die Gelenk-Gliederkette aus einer Kurve auf ein gerades Teilstück einbiegt. Diese Energierückgewinnung senkt den Energiebedarf.

Die im Folgenden beschriebene Gelenk-Gliederkette beziehungsweise Fördereinrichtung kann auch in anderen Bereichen, beispielsweise in der Verpackungsindustrie oder im Logistikbereich sowie zum Kommissionieren, zur Anwendung kommen und nicht nur in der Verarbeitung von flächigen Produkten beziehungsweise Druckereiprodukten.

Im Folgenden wird anhand einer Zeichnung eine besonders bevorzugte Ausführungsform einer erfindungsgemässen Gelenk-Gliederkette beziehungsweise einer erfindungsgemässen Fördereinrichtung erläutert. Es zeigen rein schematisch:
- Fig. 1: in einer perspektivischen Darstellung einen Ausschnitt einer erfindungsgemässen Gelenk-Gliederkette, welche dazu bestimmt ist, in einem hier nicht gezeigten C-förmigen Führungskanal angeordnet und geführt zu sein;
- Fig. 2: einen Querschnitt entlang der Linie II-II durch ein Gelenkglied wobei der C-förmige Führungskanal hier ebenfalls im Querschnitt gezeigt ist;
- Fig. 3: einen Abschnitt einer Gelenk-Gliederkette bei der Verbindung von zwei benachbarten Gelenkglieder;
- Fig. 4: einen Querschnitt entlang der Linie IV-IV aus Fig. 3;
- Fig. 5: einen Schnitt entlang der Linie V-V der Fig. 3 durch ein Gelenk eines Gelenkglieds;
- Fig. 6: einen Längsschnitt durch einen zweiten Endbereich eines Verbindungselements mit einem in einem zweiten Durchlass angeordneten Gelenkkörper;
- Fig. 7: einen Querschnitt durch einen zweiten Durchlass mit einem Gelenkkörper entlang der Linie VII-VII aus Fig. 6;
- Fig. 8: in gleicher Darstellung wie Fig. 7 eine Ausführungsform, bei welcher der Gelenkkörper als Verbundelement ausgebildet ist; und
- Fig. 9: eine Seitenansicht einer Gelenk-Gliederkette mit zwei Gelenkgliedern.

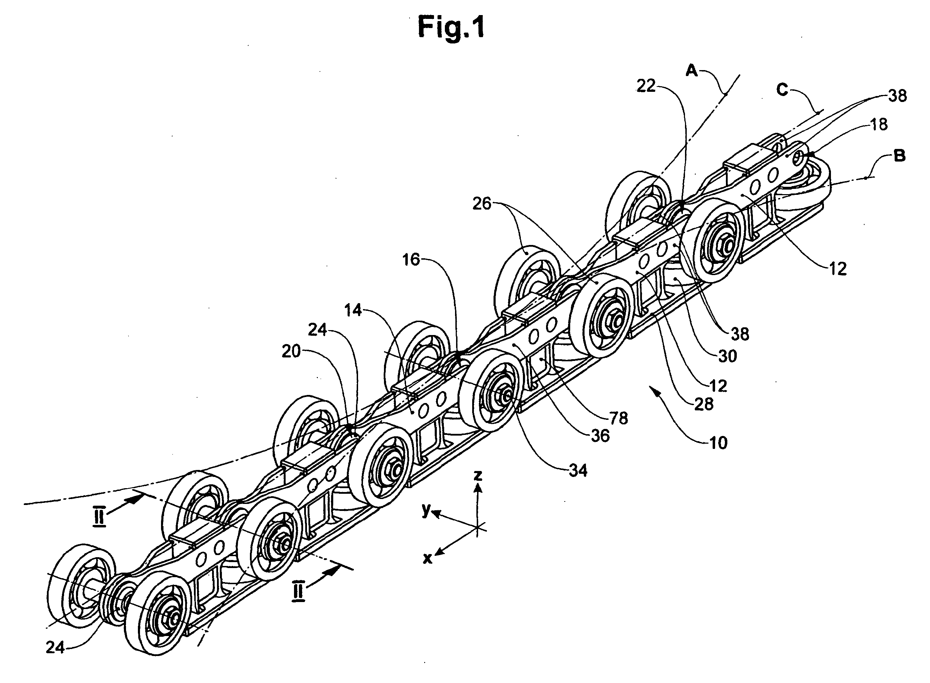

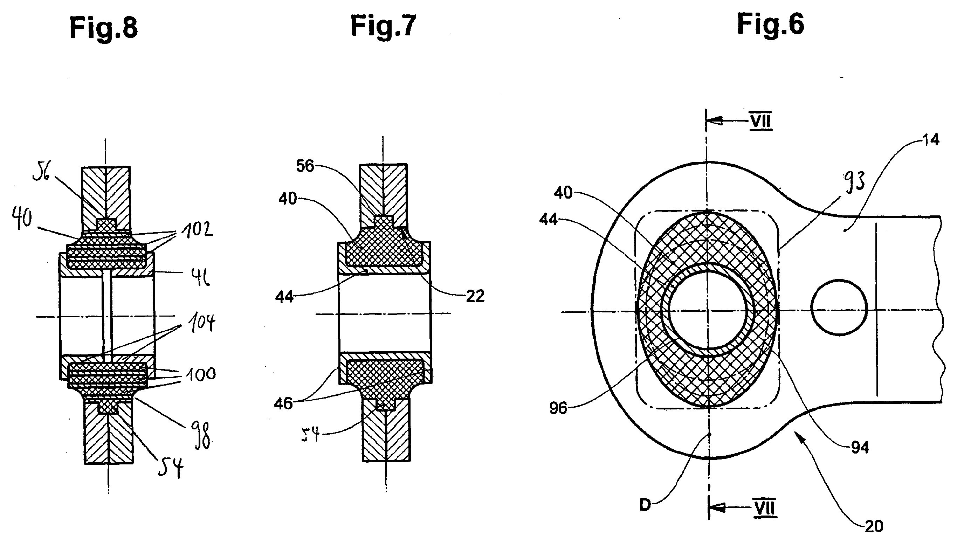

Fig. 1 zeigt, in einer perspektivischen Darstellung, eine Gelenk-Gliederkette 10 mit mehreren hintereinander angeordneten Gelenkgliedern 12. Üblicherweise sind solche Gelenk-Gliederketten 10 in sich geschlossen. Jedes Gelenkglied 12 weist ein Verbindungselement 14 auf. Das Verbindungselement 14 weist in einem ersten Endbereich 16 einen ersten Durchlass 18 und in einem zweiten Endbereich 20 einen zweiten Durchlass 22 auf. Der erste Durchlass 18 als auch der zweite Durchlass 22 sind vorzugsweise kreisrund ausgebildet, es ist aber auch denkbar die zweiten Durchlässe 22 ellipsenförmig auszubilden(vgl. Fig. 7). Die Verbindungselemente 14 und somit die Gelenkglieder 12 sind mittels Gelenken 24 miteinander verbunden. Die Gelenke 24 erlauben eine Bewegung der einzelnen Gelenkglieder 12 gegenüber einander in allen Ebenen (xy, yz und zx) des in Fig. 1 gezeigten Koordinatensystems. Die strichpunktierte Linie A zeigt eine mögliche Bewegungsbahn mit einer Kurve in der xz-Ebene, die strichpunktierte Linie B zeigt eine mögliche Bewegungsbahn mit einer Kurve in der xy-Ebene und die strichpunktierte Linie C eine mögliche Bewegungsbahn entlang der x-Achse des Koordinatensystems. Es ist auch möglich die Gelenkglieder 12 relativ zueinander um die Längsrichtung zu verwinden.

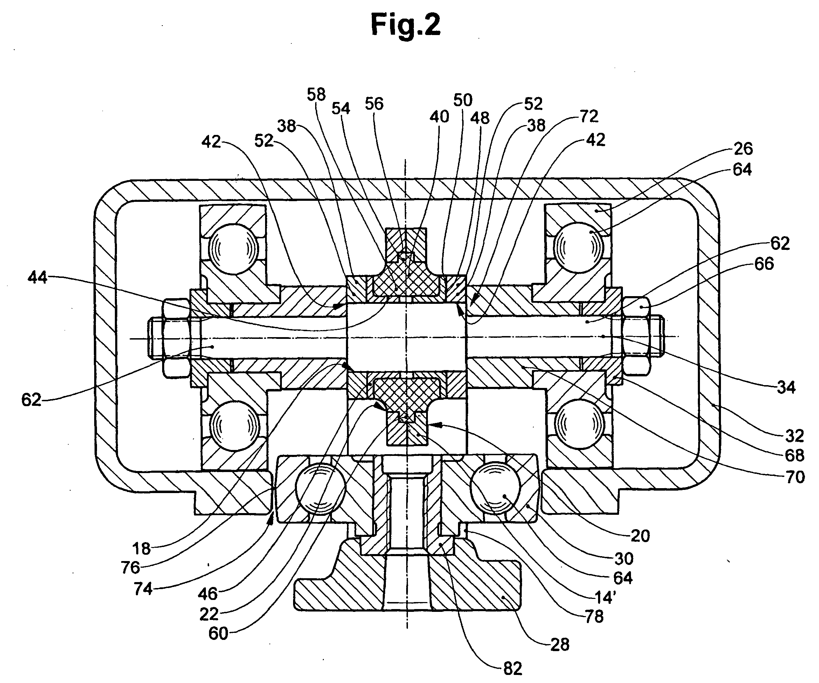

Mittels den in Fig. 1 gezeigten Laufrädern 26 und einem, an einem Adapterelement 28 angeordneten Führungsrad 30 werden die Gelenkglieder 12 beziehungsweise wird die Gelenk-Gliederkette 10 in einem C-förmigen Führungskanal 32 gehalten und geführt. Ein Querschnitt des C-förmigen Führungskanals 32 ist in Fig. 2 gezeigt. Die Laufräder 26 sind an beiden Enden einer Achse 34 frei drehbar gelagert und im Betrieb in dem C-förmigen Führungskanal 32 angeordnet. In Fig. 1 sind zudem die Adapterelemente 28 gezeigt, welche dazu dienen, Transportelemente (nicht gezeigt), vorzugsweise Transportklammern, aufzunehmen. Weiter ist in Fig. 1 eine Gabelung 36, welche durch das Verbindungselement 14 ausgebildet ist, gezeigt. Die Gabelung 36 formt im ersten Endbereich 16 zwei zinkenartige Gabelteile 38 an welchen der erste Durchlass 18 ausgebildet ist. Weiter sind die Adapterelemente 28 jeweils zwischen den Gabelteilen 38 angeordnet und mit diesem fest verbunden.

Fig. 2 zeigt einen Querschnitt durch das Gelenkglied 12 und den C-förmigen Führungskanal 32 entlang der Linie II-II aus Fig. 1. Zwischen den beiden zinkenartigen Gabelteilen 38 ist ein Gelenkkörper 40 und der zweite Endbereich 20 eines benachbarten Verbindungselements 14' angeordnet. Der Gelenkkörper 40 umgreift die Achse 34 und ist drehbar auf dieser gelagert. Die Achse 34 durchgreift die beiden Durchlässe 42 in den Gabelteilen 38, welche den ersten Durchlass 18 bilden, und ist dort fest gehalten. Die Achse 34 verläuft wenigstens annähernd, im gezeigten Ausführungsbeispiel genau rechtwinklig zu einer Längsrichtung des betreffenden Verbindungselements 14.

Zwischen dem Gelenkkörper 40 und der Achse 34 ist eine Lagerhülse 44 angeordnet, die an den axialen Enden radial nach aussen abstehende Flansche 46 aufweist. Die Lagerhülse 44 und die Achse 34 bilden zusammen ein Gleitlager. Die Lagerhülse 44 ist, vorzugsweise und wie hier gezeigt, zweiteilig und zwar entlang einer Ebene rechtwinklig zur Achse 34 symmetrisch getrennt, ausgebildet. Die Lagerhülse 44 ist aus einem Material, beispielsweise Kunststoff, gefertigt, welches bezüglich dem Material der Achse 34, beispielsweise Stahl, gute Gleiteigenschaften aufweist. Die Flansche 46 der Lagerhülse 44 liegen mit ihren äusseren Oberflächen 48 an den inneren Oberflächen 50 der zinkenartigen Gabelteile 38 an. Dadurch wird verhindert, dass sich der Gelenkkörper 40 auf der Achse 34 in axialer Richtung verschieben kann und es wird gleichzeitig ein Gleitlager zwischen der Lagerhülse 44 und den zinkenartigen Gabelteilen 38 beziehungsweise dem Verbindungselement 14 gebildet. Durch die zweiteilige Ausbildung der Lagerhülse 44 gestaltet sich die Wartung der Gelenke 24 einfach.

Die Gabelung 36 beziehungsweise das Verbindungselement 14 kann einerseits aus einem Gussteil geformt sein oder es wird durch zwei aneinander befestigten Laschen 52 gebildet, die abgekröpft sind und so die Gabelung 36 mit den zwei zinkenartigen Gabelteilen 38 bilden.

Der zweite Endbereich 20 eines benachbarten Verbindungselements 14' greift zwischen die beiden Gabelteile 38 ein. Die Achse 34 durchgreift nebst dem ersten Durchlass 18 des Verbindungselements 14 auch den zweiten Durchlass 22 des benachbarten Verbindungselements 14'. Die einzelnen Gelenkglieder 12 sind also durch die Achse 34 im Zusammenwirken mit dem ersten Durchlass 18 eines Gelenkglieds 12 und dem zweiten Durchlass 22 eines benachbarten Gelenkglieds 12' sowie dem dazwischen angeordneten mit der Lagerhülse 44 versehenen Gelenkkörper 40 miteinander gelenkig verbunden.

In dem zweiten Durchlass 22 des Verbindungselements 14' des benachbarten Gelenkglieds 12' ist der Gelenkkörper 40 angeordnet. Der Gelenkkörper 40 greift mittels einer umfangsseitig verlaufenden Haltewulst 54 in eine umlaufende Nut 56 im zweiten Durchlass 22 ein und ist so im zweiten Durchlass 22 gehalten. Es ist auch denkbar, den Gelenkkörper 40 mittels Kleben, Klemmen oder sonstigen Befestigungsvarianten im zweiten Durchlass 22 zu fixieren.

Der Gelenkkörper 40 besteht aus einem gummielastischen Material, vorzugsweise aus Kautschuk oder synthetischem Kautschuk. Die Materialeigenschaften des gummielastischen Materials sind so gewählt, dass die Elastizität des Gelenkkörpers 40 in Längsrichtung des Verbindungselements 14 klein ist.

Der Gelenkkörper 40 weist einen Querschnitt auf, dessen Dimensionen - in Richtung der Achse 34 gemessen - radial innen grösser ist als radial aussen. In einem radial innen liegenden Endbereich 58 ist der Gelenkkörper 40 rechteckförmig, sowie daran anschliessend, vorzugsweise mit einer konkaven Form, symmetrisch verjüngend ausgebildet. In einem radial aussen liegenden Endbereich 60 weist der Gelenkkörper 40 stufenartige Verjüngungen zur Bildung des Haltewulstes 54 auf. Der rechteckförmige Bereich stützt die Flansche 46 der Lagerhülse 44 und verhindert eine Bewegung der Lagerhülse 44 entlang der Achse 34. Die beiden Verjüngungen sind in axialer Richtung durch den Haltewulst 54 voneinander getrennt. Mittels der Verjüngungen wird der Gelenkkörper 40 umfangsseitig, daher in radialer Richtung, im zweiten Durchlass 22 des benachbarten Verbindungselements 14' gehalten.

Das Verhältnis der Breite an der Basis des Gelenkkörpers 40 in Richtung der Achse 34 zur Höhe, von der Basis des Gelenkkörpers 40 bis zur Verjüngung, beträgt ungefähr 2:1. Die Höhe des Gelenkkörpers 40 steht zur Höhe des rechteckförmigen Bereichs ungefähr in einem Verhältnis von 2:1. Weiter beträgt das Verhältnis der Breite in Richtung der Achse 34 des rechteckförmigen Bereichs des Gelenkkörpers 40 zur Breite bei der Verjüngung ungefähr 2:1.

Es ist auch denkbar, die Nut 56 umfangsseitig umlaufend am Gelenkkörper 40 und den Haltewulst 54 umlaufend im zweiten Durchlass 22 des benachbarten Verbindungselements 14' auszubilden.

Die symmetrische Verjüngung kann auch in einer linearen Form ausgebildet sein. Durch die beschriebene Querschnittsform, die drehbare Lagerung des Gelenkkörpers 40 auf der Achse 34 und die Ausbildung des Gelenkkörpers 40 als gummielastisches Element, wird die Beweglichkeit des Gelenks 24 und somit der gesamten Gelenk-Gliederkette 10 erzielt. Die drehbare Lagerung des Gelenkkörpers 40 auf der Achse 34 ermöglicht eine Bewegung der Gelenkglieder 12 gegenüber einander in der zx-Ebene. Die beschriebene Ausbildung des Gelenkkörpers 40 erlaubt eine Bewegung der Gelenkglieder 12 gegenüber einander in der xy- und der yz-Ebene. Die Bewegungsfreiheit um die Achse, daher in der xz-Ebene, ist dabei sehr gross und es können somit auch kleine Radien gefahren werden. Dies ist insbesondere bei der Verwendung von bekannten Antrieben mittels Antriebsräder, um welche die Gelenk-Gliederkette 10 geführt ist, von Vorteil. Die Bewegungsfreiheiten in der xy-Ebene der Gelenk-Gliederkette 10 und für die Verwindung um die x-Achse sind durch die elastischen Eigenschaften und die Geometrie der Gelenkkörper 40 gegeben. Die Bewegung in der xz-Ebene, also das Drehen um die Achse 34, ist entkoppelt von der Bewegung in der xy-Ebene und von der Verwindung um die x-Achse.

Durch die beschriebene Ausbildung der Gelenke 24 beziehungsweise der Gelenkkörper 40 ist es möglich, sowohl Druck- als auch Zugkräfte in die Gelenk-Gliederkette 10 einzuleiten. Eine geringe oder begrenzte Elastizität der Gelenkkörper 40 in Längsrichtung des Verbindungselements 14 ist dabei von Bedeutung. Durch die Verwendung von gummielastischem Material für den Gelenkkörper 40 wird weiter eine optimale Krafteinleitung in die Gelenk-Gliederkette 10 erreicht.

Auf der Achse 34, die im Bereich des ersten Durchlasses 18 einen grösseren Querschnitt als an ihren beiden äusseren Bereichen aufweist, sind an den äusseren Endabschnitten 62 die Laufräder 26 frei drehbar angeordnet und gelagert. Die Laufräder 26 und das Führungsrad 30 sind mit Kugellagern 64 versehen, was die Reibung reduziert. An den beiden äusseren Endabschnitten 62 der Achse 34 sind jeweils Gewinde angeordnet auf denen eine Mutter 66 mittels einer Klemmhülse 68 und einer Distanzhülse 70 die Laufräder 26 in bekannter Art und Weise festhält. Die Klemmhülse 68 steht dabei einerseits an der Mutter 66 und andererseits am betreffenden Innenring des Kugellagers 64 an. Die Distanzhülse 70 stützt sich einerseits am Innenring des Kugellagers 64 und andererseits an einer Stufe 72, gebildet durch den Übergang von einem kleineren zu dem grösseren Querschnitt im mittleren Bereich der Achse 34, ab. Durch die beschriebene Anordnung der Distanzhülsen 70 ist auch die axiale Position der Gabelteile 38 und des Gelenkkörpers 40 und damit auch der Lagerhülse 44 festgelegt.

In Fig. 2 ist ausserdem gezeigt, wie das Führungsrad 30 den C-förmigen Führungskanals 32 bei einem Führungsspalt 74 durchgreift und mit Flanken 76 des C-förmigen Führungskanals 32, welche den Führungsspalt 74 begrenzen, zusammenwirkt. Durch das Führungsrad 30 werden die Gelenkglieder 12 im C-förmigen Führungskanal 32 zentriert gehalten.

In Fig. 1 und 2 ist zudem das T-förmige Adapterelement 28 gut erkennbar. Ein Stützbereich 78 des Adapterelements 28 durchgreift dabei den Führungsspalt 74. Anschliessend an diesen Stützbereich 78 ist ein Schenkel 80 ausgebildet, der ausserhalb des Führungsrades 32 parallel zur Längsrichtung des betreffenden Verbindungselements 14 verläuft (vgl. auch Fig. 8). In einem dem ersten Durchlass 18 zugewandten Bereich des Schenkels 80 ist auf einer, dem Verbindungselement 14 zugewandten Seite das Führungsrad 30 angeordnet. Das Führungsrad 30 ist mittels eines pilzförmigen Lagerorgans 82 im Schenkel 80 gehalten. Das pilzförmige Lagerorgan 82 greift mit einem Kopfbereich in eine Ausnehmung des Schenkels 80 ein und ist so in der Ausnehmung eingepresst. Das pilzförmige Lagerorgan 82 weist weiter mittig einen Durchlass auf, der auch den Schenkel 80 des Adapterelements 28 durchgreift. In diesen Durchlass kann eine Schraube eingewindet werden. Das Adapterelement 28 weist einen weiteren Durchlass auf, der auf der gegenüberliegenden Seite des Schenkels 80 ausgebildet ist (vgl. Fig. 8), darin kann ebenfalls eine Schraube eingewindet werden. Mittels der beiden Schrauben ist es möglich, Transportelemente (hier nicht gezeigt) an dem Adapterelement 28 zu befestigen.

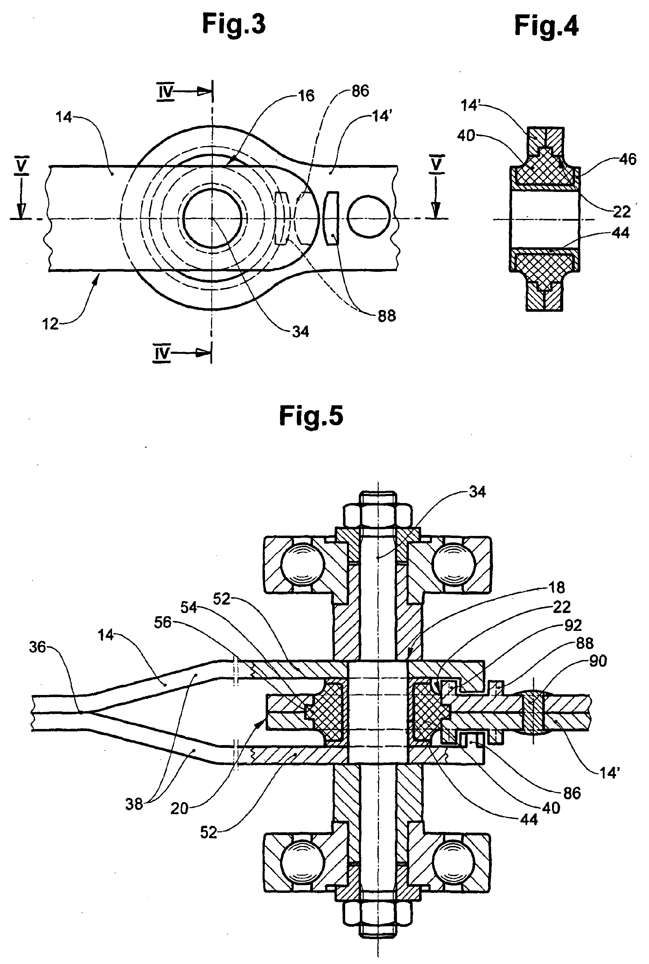

In Fig. 3 ist ein Abschnitt einer Gelenk-Gliederkette 10 bei der Verbindung von zwei benachbarten Gelenkgliedern 12 gezeigt. Das Verbindungselement 14 weist im ersten Endbereich 16 auf jeder Seite Anschläge 86 auf. Das benachbarte Verbindungselement 14' weist im zweiten Endbereich 20 auf jeder Seite Gegenanschläge 88 auf, die dazu bestimmt sind mit dem jeweils dazwischen angeordneten Anschlag 86 des Verbindungselements 14 zusammenzuwirken.

Die Anschläge 86 sind - in einer Richtung rechtwinklig zur Längsrichtung des Verbindungselements 14 und rechtwinklig zu Achse 34 - auf beiden Seiten konvex ausgebildet. Die Gegenanschläge 88 sind - ebenfalls in einer Richtung rechtwinklig zur Längsrichtung des Verbindungselements 14 und rechtwinklig zur Achse 34 - auf Flächen, die den Anschlägen 86 zugewandt sind, konvex ausgebildet. Durch die konvexe Ausbildung, wird eine Bewegung der Gelenkglieder 12 gegenüber einander in der xz-Ebene (vgl. Fig. 1), daher ein Schwenken um die Achse 34 erlaubt. Die Anschläge 86 beziehungsweise die Gegenanschläge 88 erlauben zusätzlich eine Drehung der Gelenkglieder 12 gegenüber einander in Längsrichtung des Verbindungselements 14 (Verwinden), was einer Bewegung in der yz-Ebene entspricht. Weiter erlauben die Anschläge 86 beziehungsweise die Gegenanschläge 88 eine Bewegung in der xy-Ebene. Es ist also zwischen den Anschlägen 86 des Verbindungselements 14 beziehungsweise den Gegenanschlägen 80 des benachbarten Verbindungselements 14' genügend Spiel vorhanden, um die beschriebene Bewegungsfreiheit zu erlauben. Die Anschläge 86 sowie die Gegenanschläge 88 sind vorzugsweise einstückig an dem Verbindungselement 14, 14' angeformt. Es ist jedoch auch denkbar, diese Anschläge 86 und Gegenanschläge 88 als separate Teile auszubilden.

Die Anschläge 86 berühren dabei die Gegenanschläge 88 bei hoher Belastung, jedenfalls bei einem Notstopp. Dies begrenzt die Beanspruchung des Gelenkkörpers 40 und des von der Achse 34 und der Lagerhülse 44 gebildetem Gleitlagers. Eine hohe Belastung kann auch im normalen Betrieb auftreten.

Fig. 4 zeigt einen Querschnitt entlang der Linie IV - IV aus Figur 3, durch einen Gelenkkörper 40 beziehungsweise durch einen zweiten Durchlass 22. In Fig. 4 ist der Gelenkkörper 40 genau gleich ausgebildet wie in Fig. 2. Die Flansche 46 der Lagerhülse 44 sind gut erkennbar. Die Lagerhülse 44 ist in dieser Ausführungsform jedoch einteilig ausgebildet. Aus der Fig. 4 wird ersichtlich, dass der Gelenkkörper 40 an die Lagerhülse 44 angespritzt oder angegossen ist. Grundsätzlich ist das Anspritzen oder Angiessen auch in der Ausführungsform gemäss Fig. 2 möglich. Bei der Ausführungsform gemäss Fig. 2 besteht aber ebenfalls die Möglichkeit, den Gelenkkörper 40 und die Lagerhülse 44 unabhängig voneinander herzustellen und diese individuell auszubilden.

Fig. 5 zeigt einen Schnitt entlang der Linie V - V aus der Fig. 3 durch das von zwei Laschen 52 gebildete Verbindungselement 14 sowie durch ein benachbartes Verbindungselement 14'. Gut erkennbar ist die Gabelung 36 mit den zinkenartigen Gabelteilen 38 zwischen denen der zweite Endbereich 20 eines benachbarten Verbindungselements 14' angeordnet ist. Die Achse 34 durchgreift den ersten Durchlass 18 und den zweiten Durchlass 22 und verbindet so das Verbindungselement 14 über die Lagerhülse 44 und den Gelenkkörper 40 mit dem benachbarten Verbindungselement 14'. Im zweiten Endbereich 20 liegen die spiegelsymmetrischen Laschen 52 aneinander an und sind mittels einer Niete 90 miteinander verbunden. Der Gelenkkörper 40 ist mittig in der Gabelung 36 angeordnet und zusammen mit der Lagerhülse 44 drehbar auf der Achse 34 gehalten. Es ist wiederum deutlich erkennbar, dass der Gelenkkörper 40 mit der Haltewulst 54 in die Nut 56 des zweiten Durchlasses 22 eingreift. Die Nut 56 wird dabei durch Ausnehmungen, die als zwei Halbnuten ausgebildet sind, in dem zweiten Durchlass 22 der Laschen 52 des benachbarten Verbindungselements 14' geformt.

Die Anschläge 86 beziehungsweise die Gegenanschläge 88 sind in Figur 5 im Schnitt und in Draufsicht gut erkennbar. Die zinkenartigen Gabelteile 38 weisen an ihrem Ende auf den einander zugewandten Seiten die Anschläge 86 auf, die in den inneren Bereich der Gabelung 36 hineinragen. Die Gegenanschläge 88, welche aus jeweils zwei vom benachbarten Verbindungselement 14' in Richtung der Achse 34 gegen aussen abstehenden Rippen 92 bestehen, sind in dem zweiten Endbereich 20 des benachbarten Verbindungselements 14' angeordnet. Die Anschläge 86 greifen zwischen die Rippen 92 der Gegenanschläge 88 des benachbarten Verbindungselements 14' ein. Es ist auch denkbar diese Anordnung umgekehrt auszubilden.

In Fig. 6 und Fig. 7 ist eine weitere Ausführungsform des Gelenkkörpers 40 gezeigt. Fig. 6 zeigt einen Längsschnitt durch einen zweiten Endbereich 20 eines Verbindungselements 14 mit einem in einem zweiten Durchlass 22 einer Lasche 52 angeordneten Gelenkkörper 40. Fig. 7 zeigt einen Querschnitt durch den Gelenkkörper 40 entlang der Hauptachse D einer Ellipse (vgl. Fig. 6).

In Fig. 6 ist zudem eine mögliche Ausführungsform des Gelenkkörpers 40 mit einer rechteckförmigen Aussenkontur mit strichpunktierten Linien angedeutet. Die Ecken des Rechtecks sind gerundet. Die längeren Seiten 93 des Rechtecks verlaufen in einer Richtung rechtwinklig zur Längsrichtung des Verbindungselements 14 in der vom Verbindungselement definierten Ebene. Der zweite Durchlass 22 ist gegengleich geformt. Durch eine solche Ausbildung wird ein Drehen des Gelenkkörpers 40 bezüglich des betreffenden Verbindungselements 14 verhindert.

Der Gelenkkörper 40 weist eine elliptische Aussenkontur 94 und eine kreisrunde Innenkontur 96 auf. Die Hauptachse D der elliptischen Aussenkontur 94 ist rechtwinklig zur Längsrichtung des betreffenden Verbindungselements 14, welches den Gelenkkörper 40 umfangsseitig festhält, angeordnet. Der zweite Durchlass 22 ist ebenfalls entsprechend elliptisch ausgebildet. Die Lagerhülse 44 ist in Fig. 6 gezeigt. Der Gelenkkörper 40 weist in Richtung der Hauptachse D der Ellipse den gleichen Querschnitt wie in Fig. 2 und in Fig. 4 auf. In Längsrichtung des Verbindungselements 14 ist dieser jedoch reduziert. Eine solche Ausbildung des Gelenkkörpers 40 führt zu einer Versteifung oder zu einer kleineren Elastizität der Gelenk-Gliederkette 10 in Längsrichtung des Verbindungselements 14. Gleichzeitig ist eine gute Nachgiebigkeit der Gelenkglieder 12 um die x-Achse (Verwindung) gegeben und eine Verdrehung des Gelenkkörpers im zweiten Durchlass 22 des benachbarten Verbindungselements 14' wird vermieden.

Fig. 8 zeigt einen Querschnitt durch den Gelenkkörper 40 entlang der Linie VII - VII aus Fig. 6. Der Gelenkkörper 40 ist als Verbundelement 98 ausgebildet. Das Verbundelement 98 weist abwechselnd gummielastische Schichten 100 und Hülsen 102 aus einem harten Material, beispielsweise Metall oder Kunststoff, auf. In Fig. 8 sind drei ineinander angeordnete, konzentrische Hülsen 102 gezeigt, wobei zwischen den konzentrischen Hülsen 102 sowie radial innen der innen liegenden Hülse 102 beziehungsweise radial aussen der aussen liegenden Hülse 102 jeweils eine gummielastische Schicht 100 angeordnet ist. Dadurch wird die Gelenk-Gliederkette 10 steifer in Längsrichtung der Gelenk-Gliederkette 10.

Die Lagerhülse 44 ist in Fig. 8 zweiteilig ausgebildet. Zwischen den beiden Lagerhülsenelementen 104 ist ein kleiner Spalt gebildet, sodass sich die beiden Lagerhülsenelemente 104 im eingebauten Zustand nicht berühren. Der Gelenkkörper 40 beziehungsweise das Verbundelement 98 ist mittels der Haltewulst 54 der radial äussersten gummielastischen Schicht 100 des Gelenkkörpers 40 umfangsseitig in der umlaufenden Nut 56 des zweiten Durchlasses 22 des benachbarten Verbindungselements 14 gehalten. Im Übrigen ist in der gezeigten Ausführungsform der Querschnitt des Gelenkkörpers 40 beziehungsweise des Verbundelements 98, gleich ausgebildet wie beispielsweise in Fig. 7.

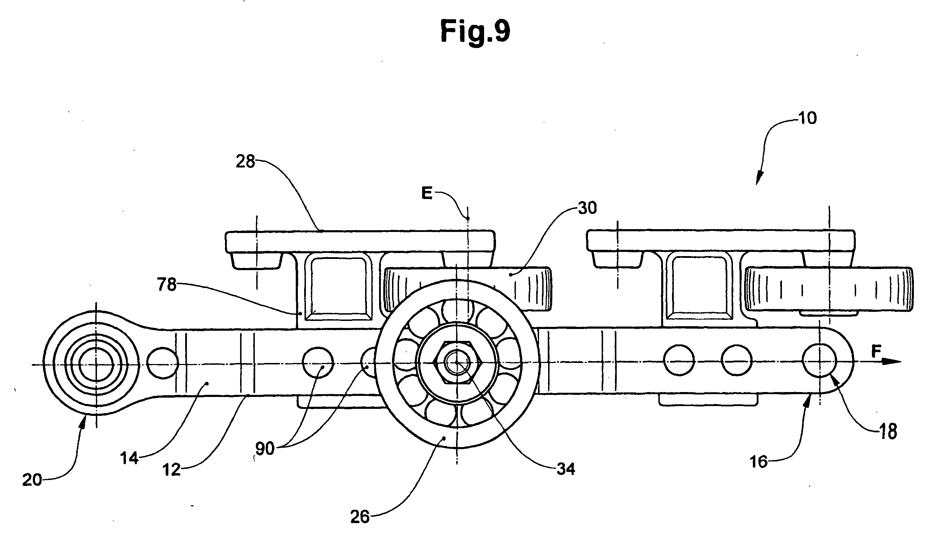

Fig. 9 zeigt eine Seitenansicht einer Gelenk-Gliederkette 10 mit zwei Gelenkgliedern 12. In dieser Darstellung sind die Laufräder 26 und das Führungsrad 30 des einen Gelenkglieds 12 gut erkennbar. Der erste Durchlass 18 des einen und der zweite Durchlass 22 des anderen Gelenkglieds 12 sind in dieser Seitenansicht ebenfalls gut erkennbar. Das Adapterelement 28 ist mittels Nieten 90 an den Verbindungselementen 14 zwischen den zinkenartigen Gabelteilen 38 befestigt. Das Adapterelement 28 ist dazu bestimmt, mit dem Stützbereich 78 den Führungsspalt 74 des C-förmigen Führungskanals 32 zu durchgreifen (vgl. Fig. 1). Die Drehachse E des Führungsrades 30 schneidet, zumindest annähernd, die Achse 34 und verläuft rechtwinklig zu dieser und rechtwinklig zur Längsrichtung des Verbindungselements 14. Es geht jedoch aus Fig. 9 hervor, dass die Drehachse E des Führungsrads 30 beziehungsweise deren Verlängerung, nicht genau durch das Zentrum der Achse 34 verlaufen muss. Es ist möglich diese Anordnung anders zu erreichen.

Eine alternative Ausführungsform besteht darin, das Verbindungselement 14 mit nur einer Lasche 52 oder als ein Verbindungselement 14 ohne Gabelung 36 auszubilden. Bei einer solchen Ausführungsform ist die Achse 34 ebenfalls in einem ersten Durchlass 18 gehalten, allerdings nur in einem Durchlass und nicht, wie in der beschriebenen Ausführungsform, in den beiden Durchlässen, welche auf Grund der Gabelung 36 gebildet sind. Der Gelenkkörper 40 ist dabei, wie beschrieben, im zweiten Durchlass 22 des benachbarten Verbindungselements 14' gehalten.

Eine weitere alternative Ausführungsform betrifft die Anordnung der Lagerhülse 44 zwischen dem Gelenkkörper 40 und dem zweiten Durchlass 22 des benachbarten Verbindungselements 14'. Bei dieser Ausführungsform ist der Gelenkkörper 40 drehfest mit der Achse 34, vorzugsweise formschlüssig, verbunden. Der Gelenkkörper 40 ist radial aussen von der Lagerhülse 44 in Umfangsrichtung umgriffen. Bevorzugt stehen von beiden axialen Enden der Lagerhülse 44 die Flansche 46 radial nach innen ab und liegen seitlich am Gelenkkörper 40 an. Eine Ausnehmung in Form einer umlaufenden Nut 56 im zweiten Durchlass 22 des benachbarten Verbindungselements 14' dient dazu, die Lagerhülse 44 aufzunehmen und diese in axialer Richtung und umfangsseitig gleitend zu lagern. Es ist möglich diese Lagerhülse 44 zweiteilig, entlang einer Ebene rechtwinklig zur Achse 34 getrennt, auszubilden. Es ist auch denkbar den Gelenkkörper 40 andersartig auf der Achse 34 drehfest zu halten.

Eine weitere alternative Ausführungsform betrifft die Anordnung je eines Gelenkkörpers 40 zwischen den Gabelteilen 38 im zweiten Endbereich des benachbarten Verbindungselements 14' und der Achse 34. Bei einer solchen Ausführungsform ist die Achse 34 vorzugsweise drehfest im ersten Durchlass 18 des Verbindungselements 14 gehalten. Die jeweilige Lagerhülse 44 kann sowohl zwischen dem jeweiligen Gelenkkörper 40 und betreffenden zweiten Durchlass 22 als auch zwischen der Achse 34 und den jeweiligen Gelenkkörper 40 angeordnet sein. Der erste Endbereich 16 des Verbindungselements 14 greift zwischen den beiden Gabelteilen 38 des benachbarten Verbindungselements 14' ein und wirkt mit der Achse 34 zusammen.

## Patentansprüche

1. Gelenk-Gliederkette (10) mit hintereinander angeordneten und jeweils über ein Gelenk (24) miteinander verbundenen Gelenkgliedern (12), die je ein Verbindungselement (14) mit einem in einem ersten Endbereich (16) angeordneten ersten Durchlass (18) und einem in einem zweiten Endbereich (20) angeordneten zweiten Durchlass (22) aufweisen, wobei im ersten Durchlass (18) eine von mindestens einem ringförmigen Gelenkkörper (40) umgriffene Achse (34) angeordnet ist und der Gelenkkörper (40) im zweiten Durchlass (22) des Verbindungselements (14) eines benachbarten Gelenkgliedes (12') angeordnet ist, **dadurch gekennzeichnet, dass** der Gelenkkörper (40) ein gummielastisches Material aufweist sowie einerseits drehbar gelagert und andererseits festgehalten ist.

2. Gelenk-Gliederkette nach Anspruch 1, **dadurch gekennzeichnet, dass** der Gelenkkörper (40) aus einem gummielastischen Material oder einem gummielastisches Material aufweisenden Verbundelement (98) besteht.

3. Gelenk-Gliederkette gemäss Anspruch 1 oder 2, **dadurch gekennzeichnet, dass** der Gelenkkörper (40) auf der Achse (34) drehbar gelagert und im zweiten Durchlass (22) des Verbindungselements (14) des benachbarten Gelenkgliedes (12') festgehalten ist.

4. Gelenk-Gliederkette gemäss Anspruch 3, **dadurch gekennzeichnet, dass** der zweite Durchlass (22) eine umlaufende Nut (56) aufweist, in welcher ein Haltewulst (54) des Gelenkkörpers (40) umfangsseitig gehalten ist.

5. Gelenk-Gliederkette gemäss Anspruch 3 oder 4, **dadurch gekennzeichnet, dass** der Gelenkkörper (40) im zweiten Durchlass (22) des Verbindungselements (14) des benachbarten Gelenkgliedes (12') in Umfangsrichtung formschlüssig gehalten ist, um ein Drehen des Gelenkkörpers (40) relativ zu diesem Verbindungselement (14) zu vermeiden.

6. Gelenk-Gliederkette gemäss einem der Ansprüche 3 bis 5, **dadurch gekennzeichnet, dass** der Gelenkkörper (40) eine elliptische oder mindestens annähernd rechteckige Aussenkontur (94) und eine kreisrunde Innenkontur (96) aufweist, wobei die Hauptachse (D) der elliptischen Aussenkontur (94) beziehungsweise die längeren Seiten (93) der mindestens annähernd rechteckigen Aussenkontur (94) wenigstens annähernd rechtwinklig zur Längsrichtung des betreffenden Verbindungselements (14), welches den Gelenkkörper (40) umfangsseitig festhält, verlaufen.

7. Gelenk-Gliederkette gemäss Anspruch 1 oder 2, **dadurch gekennzeichnet, dass** der Gelenkkörper (40) auf der Achse (34) drehfest sitzt und im zweiten Durchlass (22) des Verbindungselements (14) des benachbarten Gelenkgliedes (12') drehbar gelagert ist.

8. Gelenk-Gliederkette gemäss Anspruch 7, **dadurch gekennzeichnet, dass** der Gelenkkörper (40) auf der Achse(34) in Umfangsrichtung formschlüssig gehalten ist, um ein Drehen des Gelenkkörpers (40) relativ zur Achse (34) zu vermeiden.

9. Gelenk-Gliederkette gemäss einem der Ansprüche 1 bis 8, **dadurch gekennzeichnet, dass** zur drehbaren Lagerung zwischen der Achse (34) und dem Gelenkkörper (40) beziehungsweise dem Gelenkkörper (40) und dem Verbindungselements (14) des benachbarten Gelenkgliedes (12') eine Lagerhülse (49), vorzugsweise mit jeweils an beiden äusseren Enden radial nach aussen beziehungsweise innen abstehenden Flanschen (46), angeordnet ist.

10. Gelenk-Gliederkette gemäss Anspruch 9, **dadurch gekennzeichnet, dass** die Lagerhülse (44) zweiteilig, entlang einer Ebene rechtwinklig zur Achse (34) getrennt, ausgebildet ist.

11. Gelenk-Gliederkette gemäss einem der Ansprüche 1 bis 10, **dadurch gekennzeichnet, dass** das Verbindungselement (14) eine Gabelung (36) und im ersten Endbereich (16) zwei zinkenartige Gabelteile (38) aufweist, zwischen den Gabelteilen (38) der Gelenkkörper (40) angeordnet ist und der zweite Endbereich (20) des benachbarten Verbindungselements (14') zwischen die beiden Gabelteile (38) eingreift.

12. Gelenk-Gliederkette gemäss einem der Ansprüche 1 bis 11, **dadurch gekennzeichnet, dass** das Verbindungselement (14) eine Gabelung (36) und im zweiten Endbereich (20) zwei zinkenartige Gabelteile (38) aufweist, zwischen den Gabelteilen (38) und der Achse (34) je ein Gelenkkörper (40) angeordnet ist und der erste Endbereich (16) des benachbarten Verbindungselements (14') zwischen den beiden Gabelteilen (38) mit der Achse (34) zusammenwirkt.

13. Gelenk-Gliederkette gemäss einem der Ansprüche 1 bis 12, **gekennzeichnet durch** Begrenzungselemente, welche die Belastung des Gelenkkörpers (40), in Längsrichtung der Gelenk-Gliederkette, begrenzen.

14. Gelenk-Gliederkette gemäss einem der Ansprüche 1 bis 12, **dadurch gekennzeichnet, dass** die Verbindungselemente (14) im ersten Endbereich (16) Anschläge (86) und im zweiten Endbereich (20) mit diesen zusammenzuwirken bestimmte Gegenanschläge (88) aufweisen, um die Belastung des Gelenkkörpers (40), in Längsrichtung der Gelenk-Gliederkette, zu begrenzen.

15. Fördereinrichtung mit einem einen C-förmigen Querschnitt aufweisenden Führungskanal (32) und einer in diesem geführten Gelenk-Gliederkette (10) gemäss einem der Ansprüche 1 bis 14.

## Claims

1. Articulated link chain (10) comprising articulated links (12) arranged one behind the other and respectively connected to one another by means of a joint (24), which articulated links each have a connecting element (14) having a first passage (18) disposed in a first end region (16) and a second passage (22) disposed in a second end region (20), wherein a shaft (34) encompassed by at least one annular joint body (40) is disposed in the first passage (18) and the joint body (40) is disposed in the second passage (22) of the connecting element (14) of an adjacent articulated link (12'), **characterized in that** the joint body (40) comprises an elastomeric material and, on the one hand, is rotatably mounted and, on the other hand, is secured.

2. Articulated link chain according to Claim 1, **characterized in that** the joint body (40) consists of an elastomeric material or of a composite element (98) comprising an elastomeric material.

3. Articulated link chain according to Claim 1 or 2, **characterized in that** the joint body (40) is mounted rotatably on the shaft (34) and is secured in the second passage (22) of the connecting element (14) of the adjacent articulated link (12').

4. Articulated link chain according to Claim 3, **characterized in that** the second passage (22) has a circumferential groove (56), in which a retaining bead (54) of the joint body (40) is peripherally held.

5. Articulated link chain according to Claim 3 or 4, **characterized in that** the joint body (40) is held positively in the peripheral direction in the second passage (22) of the connecting element (14) of the adjacent articulated link (12') in order to avoid rotation of the joint body (40) relative to this connecting element (14).

6. Articulated link chain according to one of Claims 3 to 5, **characterized in that** the joint body (40) has an elliptical or at least approximately rectangular outer contour (94) and a circular inner contour (96), wherein the principal axis (D) of the elliptical outer contour (94) or the longer sides (93) of the at least approximately rectangular outer contour (94) run at least approximately at right angles to the longitudinal direction of the particular connecting element (14) which peripherally secures the joint body (40).

7. Articulated link chain according to Claim 1 or 2, **characterized in that** the joint body (40) sits in a rotationally fixed manner on the shaft (34) and is mounted rotatably in the second passage (22) of the connecting element (14) of the adjacent articulated link (12').

8. Articulated link chain according to Claim 7, **characterized in that** the joint body (40) is held positively in the peripheral direction on the shaft (34) in order to avoid rotation of the joint body (40) relative to the shaft (34).

9. Articulated link chain according to one of Claims 1 to 8, **characterized in that**, for the rotatable mounting, a bearing sleeve (44), preferably having flanges (46) which respectively at both outer ends protrude radially outwards or inwards, is disposed between the shaft (34) and the joint body (40) or between the joint body (40) and the connecting element (14) of the adjacent articulated link (12').

10. Articulated link chain according to Claim 9, **characterized in that** the bearing sleeve (44) is of two-part configuration, divided along a plane at right angles to the shaft (34).

11. Articulated link chain according to one of Claims 1 to 10, **characterized in that** the connecting element (14) has a bifurcation (36) and in the first end region (16), two prong-like fork parts (38), the joint body (40) is disposed between the fork parts (38) and the second end region (20) of the adjacent connecting element (14') engages between the two fork parts (38).

12. Articulated link chain according to one of Claims 1 to 11, **characterized in that** the connecting element (14) has a bifurcation (36) and in the second end region (20) two prong-like fork parts (38), a joint body (40) is respectively disposed between the fork parts (38) and the shaft (34), and the first end region (16) of the adjacent connecting element (14') cooperates between the two fork parts (38) with the shaft (34).

13. Articulated link chain according to one of Claims 1 to 12, **characterized by** limiting elements, which limit the load upon the joint body (40) in the longitudinal direction of the articulated link chain.

14. Articulated link chain according to one of Claims 1 to 12, **characterized in that** the connecting elements (14) have in the first end region (16) stops (86) and in the second end region (20) counter-stops (88), designed to cooperate with the said stops, in order to limit the load upon the joint body (40) in the longitudinal direction of the articulated link chain.

15. Conveying device comprising a guide channel (32) of C-shaped cross section and a therein guided articulated link chain (10) according to one of Claims 1 to 14.

## Revendications

1. Chaîne à maillons articulés (10) comprenant des maillons articulés (12) disposés les uns derrière les autres et à chaque fois connectés les uns aux autres par une articulation (24), lesquels présentent à chaque fois un élément de liaison (14) avec un premier passage (18) disposé dans une première région d'extrémité (16) et un deuxième passage (22) disposé dans une deuxième région d'extrémité (20), un axe (34) autour duquel s'engage au moins un corps d'articulation de forme annulaire (40) étant disposé dans le premier passage (18) et le corps d'articulation (40) étant disposé dans le deuxième passage (22) de l'élément de liaison (14) d'un maillon articulé adjacent (12'), **caractérisée en ce que** le corps d'articulation (40) présente un matériau ayant l'élasticité du caoutchouc et est d'une part supporté à rotation, et d'autre part maintenu fixement.

2. Chaîne à maillons articulés selon la revendication 1, **caractérisée en ce que** le corps d'articulation (40) se compose d'un matériau ayant l'élasticité du caoutchouc ou d'un élément composite (98) présentant un matériau ayant l'élasticité du caoutchouc.

3. Chaîne à maillons articulés selon la revendication 1 ou 2, **caractérisée en ce que** le corps d'articulation (40) est supporté à rotation sur l'axe (34) et est maintenu fixement dans le deuxième passage (22) de l'élément de liaison (14) du maillon articulé adjacent (12').

4. Chaîne à maillons articulés selon la revendication 3, **caractérisée en ce que** le deuxième passage (22) présente une rainure périphérique (56) dans laquelle est maintenu, du côté de la périphérie, un bourrelet de maintien (54) du corps d'articulation (40).

5. Chaîne à maillons articulés selon la revendication 3 ou 4, **caractérisée en ce que** le corps d'articulation (40) est maintenu par engagement par correspondance de forme dans la direction périphérique dans le deuxième passage (22) de l'élément de liaison (14) du maillon articulé adjacent (12'), afin d'empêcher une rotation du corps d'articulation (40) par rapport à cet élément de liaison (14).

6. Chaîne à maillons articulés selon l'une quelconque des revendications 3 à 5, **caractérisée en ce que** le corps d'articulation (40) présente un contour extérieur (94) elliptique ou au moins approximativement rectangulaire, et un contour intérieur (96) circulaire rond, l'axe principal (D) du contour extérieur elliptique (94) ou les côtés plus longs (93) du contour extérieur au moins approximativement rectangulaire (94) s'étendant au moins approximativement à angle droit par rapport à la direction longitudinale de l'élément de liaison concerné (14) qui retient fixement le corps d'articulation (40) du côté de la périphérie.

7. Chaîne à maillons articulés selon la revendication 1 ou 2, **caractérisée en ce que** le corps d'articulation repose de manière solidaire en rotation sur l'axe (34) et est supporté à rotation dans le deuxième passage (22) de l'élément de liaison (14) du maillon articulé adjacent (12').

8. Chaîne à maillons articulés selon la revendication 7, **caractérisée en ce que** le corps d'articulation (40) est maintenu sur l'axe (34) par engagement par correspondance de forme dans la direction périphérique, afin d'empêcher une rotation du corps d'articulation (40) par rapport à l'axe (34).

9. Chaîne à maillons articulés selon l'une quelconque des revendications 1 à 8, **caractérisée en ce que** pour le support rotatif entre l'axe (34) et le corps d'articulation (40) ou le corps d'articulation (40) et l'élément de liaison (14) du maillon articulé adjacent (12'), il est prévu une douille de palier (44), de préférence avec à chaque fois des brides (46) faisant saillie radialement vers l'extérieur, respectivement vers l'intérieur, aux deux extrémités extérieures.

10. Chaîne à maillons articulés selon la revendication 9, **caractérisée en ce que** la douille de palier (44) est réalisée en deux parties, de manière séparée le long d'un plan perpendiculaire à l'axe (34).

11. Chaîne à maillons articulés selon l'une quelconque des revendications 1 à 10, **caractérisée en ce que** l'élément de liaison (14) présente une bifurcation (36) et présente, dans la première région d'extrémité (16), deux parties de fourche en forme de dents (38), le corps d'articulation (40) est disposé entre les parties de fourche (38) et la deuxième région d'extrémité (20) de l'élément de liaison adjacent (14') vient en prise entre les deux parties de fourche (38).

12. Chaîne à maillons articulés selon l'une quelconque des revendications 1 à 11, **caractérisée en ce que** l'élément de liaison (14) présente une bifurcation (36) et dans la deuxième région d'extrémité (20) deux parties de fourche en forme de dents (38), un corps d'articulation respectif (40) est disposé entre les parties de fourche (38) et l'axe (34), et la première région d'extrémité (16) de l'élément de liaison adjacent (14') entre les deux parties de fourche (38) coopère avec l'axe (34).

13. Chaîne à maillons articulés selon l'une quelconque des revendications 1 à 12, **caractérisée par** des éléments de limitation qui limitent la contrainte du corps d'articulation (40) dans la direction longitudinale de la chaîne à maillons articulés.

14. Chaîne à maillons articulés selon l'une quelconque des revendications 1 à 12, **caractérisée en ce que** les éléments de liaison (14) présentent, dans la première région d'extrémité (16), des butées (86) et, dans la deuxième région d'extrémité (20), des contre-butées (88) prévues pour coopérer avec celles-ci, afin de limiter la contrainte du corps d'articulation (40) dans la direction longitudinale de la chaîne à maillons articulés.

15. Dispositif de transport comprenant un canal de guidage (32) présentant une section transversale en forme de C et une chaîne à maillons articulés (10) guidée dans celui-ci, selon l'une quelconque des revendications 1 à 14.
